# EUROPÄISCHE PATENTSCHRIFT

(11) **EP 4 424 135 B1**
(45) Veröffentlichungstag und Bekanntmachung des Hinweises auf die Patenterteilung: **26.11.2025**
(21) Anmeldenummer: 23159251.0
(22) Anmeldetag: 28.02.2023
(51) Int. Cl.: A01D 34/00, G05D 1/00, G05D 1/648

(54) **VERFAHREN ZUR STEUERUNG EINES SELBSTFAHRENDEN ARBEITSGERÄTES INSBESONDERE EINES ROBOTERMÄHERS**
METHOD FOR CONTROLLING A SELF-PROPELLED IMPLEMENT, IN PARTICULAR A ROBOTIC MOWER
PROCÉDÉ DE COMMANDE D'UN OUTIL AUTOMOTEUR, EN PARTICULIER D'UNE TONDEUSE ROBOTISÉE

(43) Veröffentlichungstag der Anmeldung: 04.09.2024
(73) Patentinhaber: Andreas Stihl AG & Co. KG, 71336 Waiblingen (DE)
(72) Erfinder: Horngacher Christian, 6365 Kirchberg (AT); Wolf, Philip, 6341 Ebbs (AT); Biechl, Alexander, 6330 Kufstein (AT); Steinlechner, Christoph, 6240 Rattenberg (AT); Ritzer, Peter, 6341 Ebbs (AT); Reitter, Michael, 6330 Kufstein (AT)
(74) Vertreter: Karzel, Philipp

(56) Entgegenhaltungen:
- EP-A2- 2 626 759
- EP-A2- 3 850 935
- DE-A1- 102021 100 122
- DE-U1- 202010 008 800

## Beschreibung

Die Erfindung betrifft ein Verfahren zur Steuerung eines selbstfahrenden Arbeitsgerätes wie einem Robotermäher oder dergleichen Arbeitsgerät. Mit einem derartigen Arbeitsgerät wird ein durch einen Randbegrenzungsdraht begrenzte Arbeitsfläche bearbeitet. Das Arbeitsgerät weist zumindest zwei Antriebsräder auf, deren Drehachse eine gemeinsame Radachse bilden. Zum getrennten Antrieb der Antriebsräder ist ein elektrischer Antrieb vorgesehen, der von einer Steuereinheit zur Ausführung einer Fahrbewegung des Arbeitsgerätes in eine Fahrtrichtung angesteuert ist.

Auf dem eine geschlossene Drahtschleife bildenden Randbegrenzungsdraht wird ein Drahtsignal gesendet. Der von dem Strom des Drahtsignals durchflossene Randbegrenzungsdraht erzeugt ein elektromagnetisches Feld. Bei Annäherung des Arbeitsgerätes an den Randbegrenzungsdraht induzieren die Feldlinien des elektromagnetischen Feldes bzw. die magnetischen Feldlinien in einer Empfangsspule des Arbeitsgerätes ein Empfangssignal. Das Empfangssignal wächst bei Annäherung an den Draht bis zum Erreichen eines Extremwerts an. Danach fällt die Signalstärke bis zum Nulldurchgang über dem Draht ab. Die Empfangsspule ist mit einem Längenabstand von der Radachse des Arbeitsgerätes angeordnet. Überfährt das Arbeitsgerät den Randbegrenzungsdraht, ergibt sich eine Phasenumkehr des Empfangssignals. So kann das Empfangssignal z.B. sein Vorzeichen wechseln.

Der Antrieb ist so ausgebildet, dass durch gegensinniges Antreiben der Antriebsräder das Arbeitsgerät um eine Hochachse drehbar ist.

Das insbesondere als Robotermäher ausgebildete Arbeitsgerät ist vorgesehen, die innerhalb des Randbegrenzungsdrahtes liegende Arbeitsfläche zu bearbeiten. Zum Beispiel wird eine durch den Randbegrenzungsdraht begrenzte Rasenfläche von dem Robotermäher gemäht. Dabei kann es vorkommen, dass der Robotermäher den Randbegrenzungsdraht überfährt und die begrenzte Arbeitsfläche verlässt. Da die Feldlinien des elektromagnetischen Feldes den Randbegrenzugsdraht kreisförmig umgeben, ändert sich mit dem Überfahren des Randbegrenzungsdrahtes die Flussrichtung in der Empfangsspule. Mit dem Überfahren des Randbegrenzungsdrahtes erfährt das Empfangssignal der Empfangsspule eine Phasenumkehr.

Ein derartiger Mähroboter ist beispielsweise aus der EP 2 626 759 A2 bekannt, wobei dieser Mähroboter über zwei Antriebsräder verfügt und unter anderem Magnetfeldsensoren aufweist, um die Intensität eines Magnetfelds eines Randbegrenzungsdrahts zu ermitteln. Dabei wird beim Überfahren des Randbegrenzungsdrahts eine Umkehr des induzierten Signals ermittelt, was eine effiziente Steuerung des Mähroboters anhand des erfassten Signals ermöglicht.

Weitere derartige Mähroboter sind aus der EP 3 850 935 A2, der DE 10 2021 100122 A1 oder der DE 20 2010 008800 U1 bekannt.

Der Erfindung liegt die Aufgabe zugrunde ein Verfahren anzugeben, mit dem ein selbstfahrendes Arbeitsgerät nach einem Verlassen der durch den Randbegrenzungsdraht begrenzten Arbeitsfläche selbstständig auf kurzem Weg in die Arbeitsfläche zurückgeführt wird.

Zur Lösung der Aufgabe ist die Steuereinheit des Arbeitsgerätes ausgebildet, bei einer Phasenumkehr des Empfangssignals, z.B. bei einem

Vorzeichenwechsel des Empfangssignals die Fahrbewegung des Arbeitsgerätes in Fahrtrichtung zunächst anzuhalten. Die Steuereinheit ist ausgebildet, nach dem Stopp der Fahrbewegung in Fahrtrichtung das Arbeitsgerät um seine Hochachse zu drehen. Ob das Arbeitsgerät im Uhrzeigersinn oder gegen den Uhrzeigersinn um die Hochachse gedreht wird, kann vorgegeben werden oder abhängig von einer Steuervariablen erfolgen. In einfacher Weise erfolgt die Drehung um die Hochachse durch gegensinniges Antreiben der Antriebsräder.

Die Empfangsspule ist mit einem Längenabstand von der Radachse des Arbeitsgerätes angeordnet, so dass bei der Drehbewegung des Arbeitsgerätes die Empfangsspule auf einem Kreis um die Hochachse bewegt wird. Während dem Drehen des Arbeitsgerätes wird die Empfangsspule kreisförmig in Richtung auf den Randbegrenzugsdraht bewegt, sodass die Feldlinien des elektromagnetischen Feldes die Empfangsspule durchsetzen. Das während der Drehung des Arbeitsgerätes um die Hochachse in der Empfangsspule induzierte Empfangssignal wird erfasst und durch die Steuereinheit auf einen Extremwert ausgewertet. Bevorzugt ist vorgesehen, dass nach dem Stoppen des Arbeitsgerätes in Fahrtrichtung die Drehung des Arbeitsgerätes um seine Hochachse über 360° erfolgt. Nach einer insbesondere vollständigen Drehung werden dann die während der Drehung erfassten Extremwerte ausgewertet.

Die Steuereinheit ist ausgebildet, von dem ermittelten Extremwert einen Wert für eine Steuergröße abzuleiten, wobei die Steuergröße genutzt wird, eine weitere Drehbewegung des Arbeitsgerätes um die Hochachse auszuführen. Diese weitere Drehbewegung ist vorgesehen, um das Arbeitsgerät in Fahrtrichtung zum Randbegrenzungsdraht auszurichten. Die Steuereinheit wird das Arbeitsgerät in Abhängigkeit der Steuergröße um die Hochachse drehen und bei Erreichen des Wertes der Steuergröße die Drehbewegung stoppen. Nach dem Stoppen der Drehbewegung werden die Antriebsräder von der Steuereinheit derart in Fahrtrichtung angetrieben, dass der Randbegrenzungsdraht überfahren wird und das Empfangssignal erneut eine Phasenumkehr erfährt, z.B. sein Vorzeichen wechselt. Das Arbeitsgerät ist auf kurzem Fahrweg in die Arbeitsfläche zurückgeführt.

Die Steuereinheit ist ausgebildet, zur Erfassung zumindest eines Extremwertes das Arbeitsgerät über zumindest 360° um seine Hochachse zu drehen. Es kann vorteilhaft sein, mehr als eine vollständige Drehung um die Hochachse auszuführen, z.B. eine Drehung um die Hochachse um 720°, 1080° oder auch mehr.

Als Steuergröße für die auszuführende weitere Drehung kann ein Prozentwert eines erfassten Extremwertes des Empfangssignals genutzt werden, insbesondere ein Maximum des Empfangssignals oder ein zwischen erfassten Extremwert des Empfangssignals liegender Wert. Die Steuergröße ist somit in einer einfachen Ausführungsform des Verfahrens von einem erfassten Extremwert abgeleitet.

Hat die Steuereinheit den Extremwert des Empfangssignals erfasst, kann die Steuereinheit die Steuergröße als Prozentwert eines erfassten Extremwertes bestimmen oder zweckmäßig den erfassten Extremwert selbst als Steuergröße verwenden. Es kann auch vorteilhaft sein, ein zwischen erfassten Extremwerten des Empfangssignals liegenden Wert als Steuergröße festzulegen.

Ein Extremwert des Empfangssignals kann ein Maximum oder auch ein Minimum des Empfangssignals sein. Insbesondere wird als Steuergröße ein Maximum des Empfangssignals genutzt.

Überfährt das Arbeitsgerät, insbesondere ein Robotermäher, den Randbegrenzungsdraht beim Verlassen der Arbeitsfläche, erfährt das Empfangssignal eine Phasenumkehr, z.B. wechselt das Vorzeichen des Empfangssignals und das Arbeitsgerät stoppt. Die zweckmäßig in Fahrtrichtung vorne liegende Empfangsspule des Arbeitsgerätes liegt nun außerhalb der Arbeitsfläche, wobei durch die eingeleitete Drehung des Arbeitsgerätes um die Hochachse die Empfangsspule in Richtung auf den Randbegrenzungsdraht zurückbewegt wird. Dabei durchfährt die Empfangsspule das elektromagnetische Feld des auf dem Randbegrenzungsdraht gesendeten Drahtsignals. Das Empfangssignal wächst bei Annäherung der Empfangsspule an den Draht bis zum Erreichen eines Extremwerts an. Über dem Draht selbst fällt die Signalstärke des Empfangssignals bis auf "Null" ab. Es werden entsprechende Empfangssignale mit sich ändernder Signalstärke empfangen. Dreht das Arbeitsgerät weiter um die Hochachse und nimmt der Abstand zum Draht wieder zu, wächst das Empfangssignal wieder an und fällt nach Erreichen eines Extremwertes wieder ab.

Wird zum Beispiel das Maximum des Empfangssignals als Steuergröße verwendet, dreht die Steuereinheit das Arbeitsgerät um die Hochachse, bis das Empfangssignal den Wert der Steuergröße erreicht hat. Ist dieses der Fall, wird die Drehbewegung des Arbeitsgerätes gestoppt und die Antriebe der Antriebsräder in Fahrtrichtung zum Randbegrenzungsdraht angetrieben, bis eine Phasenumkehr des Empfangssignals festgestellt wird. Die Phasenumkehr des Empfangssignals, die vorzugsweise als Vorzeichenwechsel erkannt wird, zeigt an, dass der Randbegrenzungsdraht überfahren ist und sich das Arbeitsgerät wieder in der durch den Randbegrenzungsdraht begrenzten Arbeitsfläche aufhält.

Es kann vorteilhaft sein, nach einer festgestellten Phasenumkehr die Fahrbewegung in Fahrtrichtung in die Arbeitsfläche für eine vorgegebene Zeitspanne fortzusetzen. Eine verlängerte Zeitdauer in Fahrtrichtung des Arbeitsgerätes in die Arbeitsfläche gewährleistet, dass auch die Antriebsräder den Randbegrenzungsdraht überfahren. Die Gefahr eines erneuten Verlassens der durch den Randbegrenzungsdraht begrenzten Arbeitsfläche kann so reduziert werden.

Es kann weiterhin vorteilhaft sein, nach einer festgestellten Phasenumkehr des Empfangssignals, z.B. nach einem Vorzeichenwechsel des Empfangssignals die Fahrbewegung in Fahrtrichtung in die Arbeitsfläche über eine odometrisch ermittelte vorgegebene Distanz fortzusetzen.

In einer Ausgestaltung des erfindungsgemäßen Verfahrens kann vorgesehen sein, dass die Steuereinheit einem erfassten Extremwert des Empfangssignals einen Drehwinkel des Arbeitsgerätes um die Hochachse zuordnet. Mit dem Start der Drehbewegung um die Hochachse zu Erfassung eines Extremwertes des Empfangssignals wird der Drehwinkel gemessen und von der Steuereinheit erfasst. Mit Erreichen eines Extremwertes wird der bis dahin erreichte Drehwinkel dem Extremwert zugeordnet. Der zugeordnete Drehwinkel wird als Ausgangslage genutzt um ausgehend von dem zugeordneten Drehwinkel des Extremwertes als Steuergröße einen vorgegebenen Drehwinkel zu bestimmen. Dieser Drehwinkel für die weitere Drehung des Arbeitsgerätes zu dessen Ausrichtung zum Randbegrenzugsdraht kann zwischen 180° und 540° liegen. Insbesondere liegt der vorgegebenen Drehwinkel zwischen 270° und 450°, zweckmäßig zwischen 315° und 405°.

Die Steuergröße in Form eines vorgegebenen Drehwinkel wird benutzt, um nach Erfassen des Extremwertes das Arbeitsgerät um die Hochachse um den vorgegebenen Drehwinkel zu drehen. Auf diese Weise kann das Arbeitsgerät derart ausgerichtet werden, dass seine Fahrtrichtung nach vorne auf den Randbegrenzungsdraht ausgerichtet ist. Wird nach Ausrichtung des Arbeitsgerätes der Antrieb von der Steuereinheit angesteuert, bewegt sich das Arbeitsgerät auf den Randbegrenzungsdraht zu und fährt wieder in die verlassene Arbeitsfläche ein.

In einer Weiterbildung der Erfindung kann auch vorgesehen sein, als Steuergröße eine vorbestimmte Zeitspanne der Drehung vorzusehen. Die Steuereinheit ist ausgebildet, nach der Erfassung eines Extremwertes des Empfangssignals das Arbeitsgerät für die vorbestimmte Zeitspanne weiter zu drehen. Eine derartige Zeitspanne kann zum Beispiel kleiner als 5 Minuten sein, z.B. 10 Sekunden sein. Innerhalb dieser Zeitspanne hat das Arbeitsgerät sich um seine Hochachse derart weit gedreht, dass es sich bei einem Antrieb der Antriebsräder in Fahrtrichtung nach vorne auf den Randbegrenzungsdraht zu bewegt und wieder in die Arbeitsfläche einfährt.

In Weiterbildung der Erfindung kann die Steuereinheit ausgebildet sein, für die zumindest eine Empfangsspule mehrere Extremwerte des Empfangssignals wie zum Beispiel zwei Maxima und/oder zwei Minima zu erfassen um jedem Maximum und/oder Minimum einen Drehwinkel des Arbeitsgerätes um die Hochachse zuzuordnen. Die Steuereinheit ist ausgebildet, nach der Erfassung der Maxima und/oder Minima die zugeordneten Drehwinkel auszuwerten und das Arbeitsgerät nach Abschluss der Erfassung der Extremwerte um die Hochachse soweit weiter zu drehen, bis es eine Drehlage zwischen den beiden Maxima oder Minima einnimmt. Die Drehbewegung wird dann gestoppt um die Antriebsräder des in seiner Drehrichtung gestoppten Arbeitsgerätes derart in eine Fahrtrichtung nach vorne oder hinten anzutreiben, dass der Randbegrenzungsdraht überfahren wird und das Empfangssignal eine Phasenumkehr erfährt, z.B. sein Vorzeichen wechselt.

Insbesondere kann vorgesehen sein, dass Arbeitsgerät mit zwei oder mehr Empfangsspulen auszustatten, die einerseits mit seitlichem Abstand zueinander und andererseits mit einem Längenabstand zu der Radachse des Arbeitsgerätes liegen. Die in den beiden Empfangsspulen induzierten Empfangssignale werden auf Minima und/oder Maxima ausgewertet. Hierzu ist die Steuereinheit entsprechend ausgebildet.

Es kann auch vorgesehen sein, die Steuereinheit derart auszubilden, dass während der Drehbewegung des Arbeitsgerätes und die Hochachse die verstreichen Drehzeit zwischen den Extremwerten des Empfangssignals zu erfassen um dann als Steuergröße eine Zeitspanne der Drehzeit um die Hochachse zu bestimmen, die kleiner als die erfasste Drehzeit ist.

Jedem Antriebsrad der Radachse ist ein Elektromotor als elektrischer Antrieb zugeordnet. Die Hochachse des Arbeitsgerätes liegt vorzugsweise auf der durch die Antriebsräder gebildeten gemeinsamen Radachse. Insbesondere liegt die Hochachse mittig auf der Radachse zwischen den Antriebsrädern.

Weitere Merkmale der Erfindung ergeben sich aus den weiteren Ansprüchen, der nachfolgenden Beschreibung sowie den Zeichnungen. Die in den Ansprüchen, der Beschreibung sowie den Zeichnungen offenbarten Merkmale sind zur Kennzeichnung des erfindungsgemäßen Verfahrens untereinander frei kombinierbar. In den Zeichnungen zeigen:
- Fig. 1: eine schematische Draufsicht auf ein Arbeitsgerät, insbesondere einen Robotermäher,
- Fig. 2: eine schematische Darstellung eines Robotermähers mit einem elektromagnetischen Feld des Randbegrenzungsdrahtes und einer Äquipotenziallinie eines Maximums mit einem Abstand zum Randbegrenzungsdraht von weniger als 72 cm,
- Fig. 3: eine schematische Darstellung eines Robotermähers mit einem elektromagnetischen Feld des Randbegrenzungsdrahtes und einer Äquipotenziallinie eines Maximums mit einem Abstand zum Randbegrenzungsdraht von mehr als 72 cm,
- Fig. 4: eine schematische Darstellung einer durch einen Randbegrenzungsdraht begrenzten Arbeitsfläche.
- Fig. 5: eine schematische Darstellung der Drehbewegung des Arbeitsgerätes um die Hochachse mit örtlich unterschiedlichen Abständen zum Randbegrenzungsdraht,
- Fig. 6a: der Verlauf der Größe des Empfangssignals über dem Drehwinkel bei einer Drehung des Arbeitsgerätes um 360° um die Hochachse an einem geraden Drahtabschnitt des Randbegrenzugsdrahtes nach Fig. 4,
- Fig. 6b: der Verlauf der Größe des Empfangssignals über dem Drehwinkel bei einer Drehung des Arbeitsgerätes um 360° um die Hochachse an einem Außeneck des Randbegrenzugsdrahtes der Arbeitsfläche nach Fig. 4.

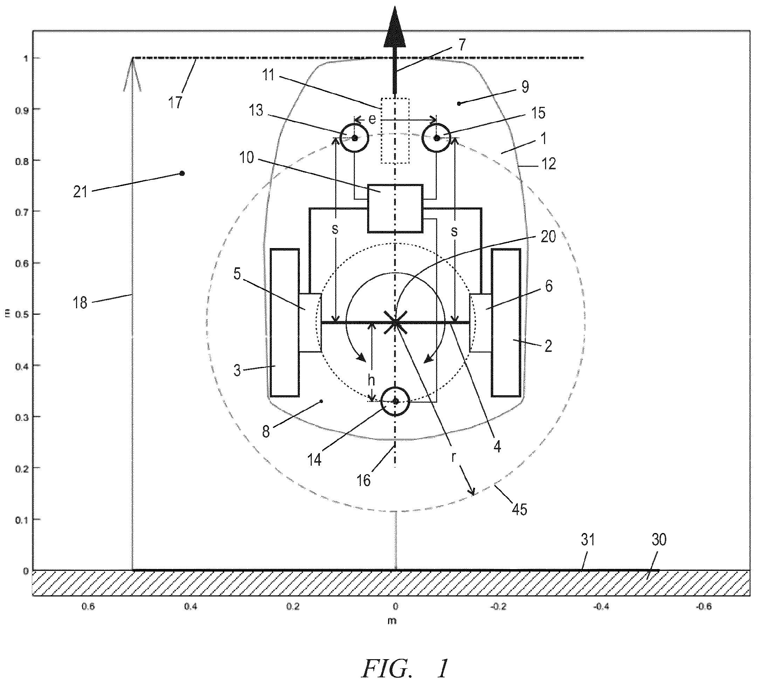

In Fig. 1 ist schematisch ein Arbeitsgerät 1 gezeigt, welches im gezeigten Ausführungsbeispiel ein Robotermäher ist. Das Arbeitsgerät 1 weist zwei Antriebsräder 2, 3 auf. Die Drehachse der Antriebsräder 2, 3 bilden eine gemeinsame Radachse 4. Es ist ein elektrischer Antrieb zum getrennten Antrieb der Antriebsräder 2, 3 vorgesehen, der im gezeigten Ausführungsbeispiel durch zwei Elektromotoren 5, 6 ausgebildet ist. Das Arbeitsgerät 1 weist ferner eine Steuereinheit 10 auf, die unter anderem den Betrieb der Elektromotoren 5, 6 ansteuert. Die Ansteuerung des elektrischen Antriebs erfolgt derart, dass das Arbeitsgerät 1 in eine Fahrtrichtung 7 eine Fahrbewegung ausführt. Die Fahrtrichtung 7 ist die Fahrtrichtung nach vorne.

Die Antriebsräder 2, 3 sind im in einem hinteren Bereich 8 des Arbeitsgerätes 1 angeordnet. Im vorderen Bereich 9 des Arbeitsgerätes kann zweckmäßig ein Stützrad 11 oder dergleichen angeordnet sein, insbesondere ein um eine Hochachse frei drehbares Stützrad 11. Im Gehäuse 12 des Arbeitsgerätes 1 ist ferner zumindest eine Empfangsspule 13, 14, 15 angeordnet. Die Empfangsspule liegt mit einem Längenabstand s bzw. h zu der Radachse 4 des Arbeitsgerätes 1.

Der elektrische Antrieb des Arbeitsgerätes 1, im Ausführungsbeispiel die beiden Elektromotoren 5, 6, können zur Bewegung des Arbeitsgerätes 1 in Fahrtrichtung 7 synchron angetrieben werden. Zur Ausführung von Lenkbewegungen werden die Elektromotoren 5, 6 des elektrischen Antriebs derart angesteuert, dass die Antriebsräder 2, 3 mit unterschiedlicher Drehzahl drehen. Zum Drehen bzw. Wenden des Arbeitsgerätes 1 um eine Hochachse 20 werden die Antriebsräder 2, 3 vorteilhaft gegensinnig angetrieben.

Die Hochachse 20, um die das Arbeitsgerät 1 gedreht werden kann, liegt vorteilhaft auf der Radachse 4 zwischen den Antriebsräder 2, 3. Insbesondere ist vorgesehen, dass die Hochachse 20 auf der Radachse 4 mittig zwischen den Antriebsräder 2, 3 liegt. Die auf der Radachse 4 liegende Hochachse 20 hat somit zum Antriebsrad 2 den gleichen Abstand wie zu dem Antriebsrad 3.

Im gezeigten Ausführungsbeispiel liegen mit einem Längenabstand s vor der Radachse 4 zwei Empfangsspulen 13, 15. Der Längenabstand s erstreckt sich in Richtung der Längsachse 16 des Arbeitsgerätes 1. Im gezeigten Ausführungsbeispiel liegen die Empfangsspulen 13, 15 mit einem quer zur Längsachse 16 gemessenen Seitenabstand e zueinander. Insbesondere liegen die Empfangsspulen 13 und 15 symmetrisch zur Längsachse 16. Die Längsachse 16 kann auch eine Längsmittelachse sein.

Die Empfangsspulen 13, 15 liegen in einem vorderen Abschnitt 9 des Gehäuses 12 des Arbeitsgerätes 1. im gezeigten Ausführungsbeispiel ist vorgesehen, im hinteren Abschnitt 8 des Gehäuses 12 des Arbeitsgerätes 1 eine weitere Empfangsspule 14 vorzusehen. Die Empfangsspule 14 liegt mit einem in Längsrichtung der Längsachse 16 gemessenen Längenabstand h zur Radachse 4. Insbesondere liegt die hintere Empfangsspule 14 auf der Längsachse 16, die auch als Längsmittelachse ausgebildet sein kann. Bevorzugt ist die Fahrtrichtung 7 des Arbeitsgerätes 1 in Richtung zum vorderen Abschnitt 9.

In Fig. 1 ist mit 31 ein Randbegrenzungsdraht bezeichnet, der eine durch das Arbeitsgerät 1 zu bearbeitende Arbeitsfläche 30 begrenzt. Das gezeigte Arbeitsgerät 1 hat gemäß der schematischen Darstellung den Randbegrenzungsdraht 31 überfahren. Der Korridor 21, innerhalb dem das Arbeitsgerät 1 stoppt, ist in Fig. 1 mit 1 m dargestellt. Die Vorderkante 17 des Arbeitsgerätes 1 liegt mit einem Abstand 18 von 1 m zum Randbegrenzungsdraht 31.

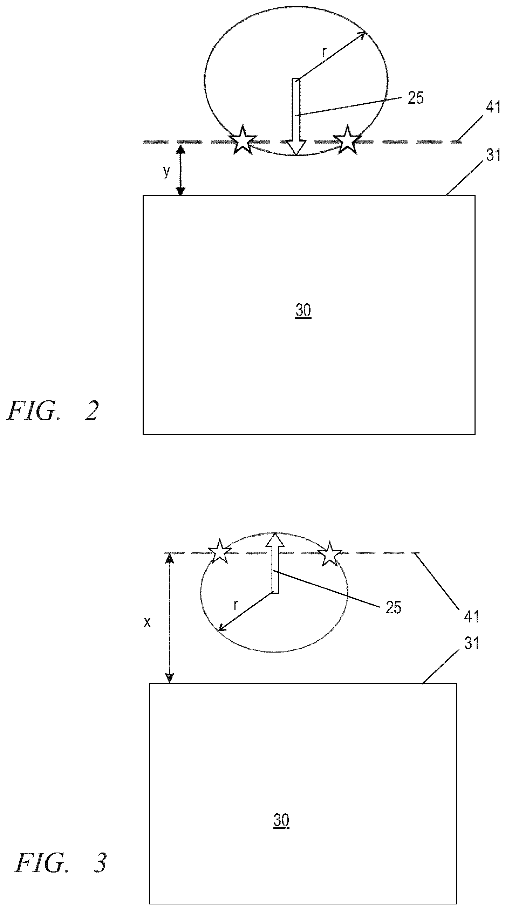

In den Fig. 2 und 3 ist dargestellt, welcher Zusammenhang zwischen einer Äquipotenziallinie 41 des Maximums und deren Abstand y zum Randbegrenzungsdraht 31 im Hinblick auf die Feldrichtung gegeben ist. Die gewählte Darstellung ist abhängig von den Abmessungen des Robotermähers und/oder von der Position der Empfangsspulen 13, 15 auf dem Robotermäher. Geht man von einem Längenabstand s einer Empfangsspule 13 oder 15 zur Radachse 4 aus, ergibt sich ein radialer Abstand r zur Hochachse 20 von zum Beispiel 36 cm. Liegt die Äquipotenziallinie 41 des Maximums in einem Abstand y von weniger als 2r zum Randbegrenzungsdraht 31, also in einem Abstand von weniger als 72 cm, ist die in Fig. 2 dargestellte Feldrichtung gegeben. Liegt hingegen die Äquipotenziallinie 41 des Maximums mit einem Abstand x größer 2r vom Randbegrenzungsdraht 31 entfernt, wechselt die Feldrichtung 25 wie in Fig. 3 dargestellt.

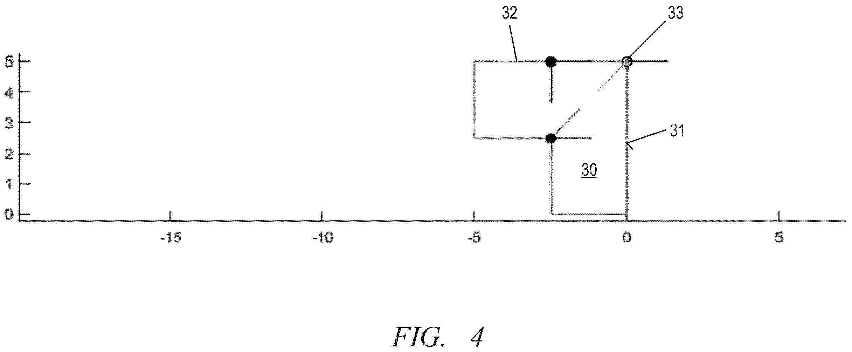

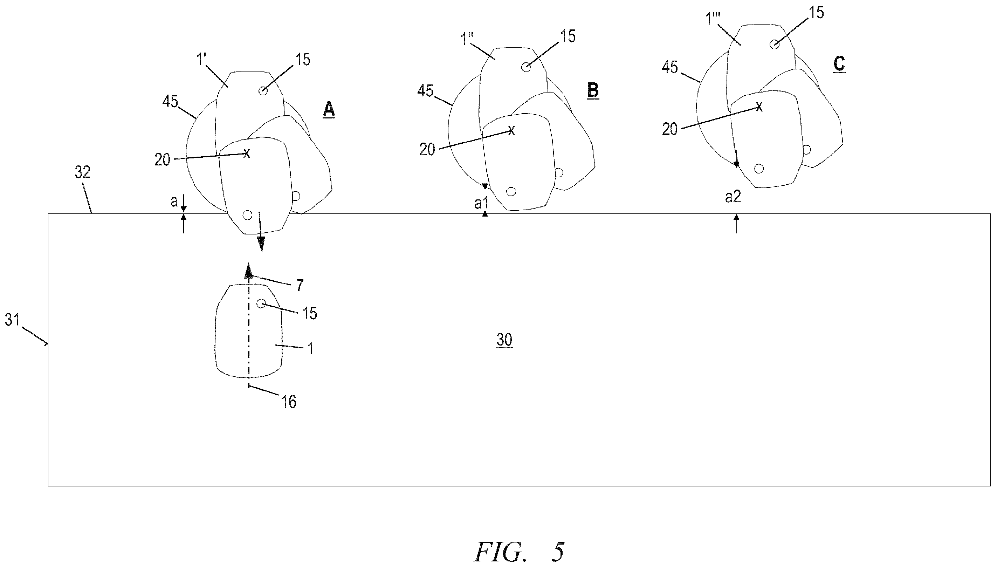

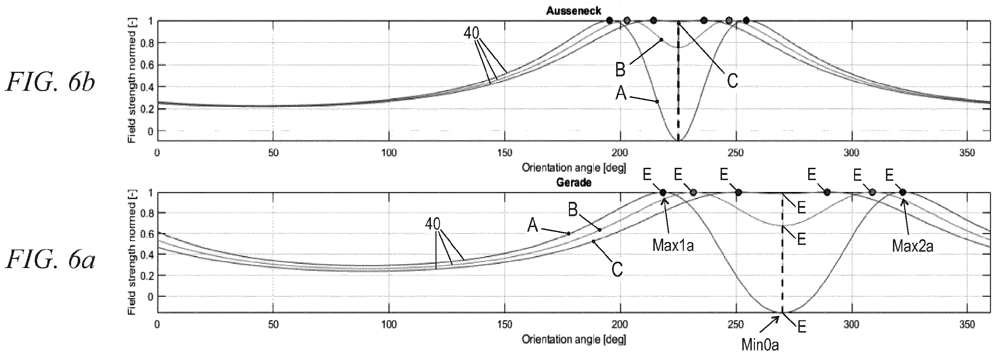

In Fig. 4 ist beispielhaft ein Arbeitsfläche 30 gezeigt, die durch einen Randbegrenzungsdraht 31 begrenzt ist. Die Arbeitsfläche 30 ist L-förmig ausgebildet und weist gerade Drahtabschnitte 32 auf sowie ein Außeneck 33. Anhand der Fig. 5 und Fig. 6a und 6b wird das Verfahren nachstehend im Einzelnen erläutert.

In Fig. 5 ist eine Arbeitsfläche 30 mit einem Randbegrenzungsdraht 31 dargestellt, wobei ein gerader Drahtabschnitt 32 des Randbegrenzungsdrahtes 31 von einem Arbeitsgerät 1 überfahren wird. Ein derartiges Arbeitsgerät 1 ist in der Arbeitsfläche 30 dargestellt und wird in Fahrtrichtung 7 in Richtung auf den Drahtabschnitt 32 des Randbegrenzungsdrahtes 31 bewegt.

Auf dem Randbegrenzungsdraht 31 wird ein Drahtsignal gesendet. Der im Randbegrenzungsdraht 31fließende Strom des Drahtsignals erzeugt ein elektromagnetisches Feld. Das durch das elektromagnetische Feld induzierte Empfangssignal wächst bei Annäherung an den Draht an, bis zum Erreichen eines Extremwerts. Danach fällt die Signalstärke des Empfangssignals bis zum Nulldurchgang über dem Draht ab. Überfährt die Empfangsspule den Randbegrenzungsdraht, tritt ein Phasenwechsel auf und die Signalstärke wächst wieder bis zu einem Extremwert an.

Bei Annäherung des Arbeitsgerätes 1 an den Randbegrenzungsdraht 31 werden die Feldlinien des elektromagnetischen Feldes bzw. die magnetischen Feldlinien in einer Empfangsspule 15 des Arbeitsgerätes 1 ein Empfangssignal 40 induzieren. Überfährt das Arbeitsgerät 1 den Drahtabschnitt 32 des Randbegrenzungsdrahtes 31, wird aufgrund der Richtungsänderung der die Empfangsspule 15 durchsetzenden Feldlinien des elektromagnetischen Feldes das Empfangssignal 40 eine Phasenumkehr erfahren, z.B. sein Vorzeichen wechseln. Die Phasenumkehr, insbesondere der Vorzeichenwechsel wird von der Steuereinheit 10 erkannt. Die Steuereinheit 10 wird die Fahrbewegung in Fahrtrichtung 7 des Arbeitsgerätes 1 stoppen, sodass das Arbeitsgerät 1 z.B. in der Stoppstellung 1' gemäß Fig. 5 anhält. Nach dem Stopp der Fahrbewegung in Fahrtrichtung 7 werden die Antriebsräder 2, 3 vorzugsweise gegensinnig angetrieben, sodass das Arbeitsgerät 1 um seine Hochachse 20 dreht. Während der Drehbewegung bewegt sich die Empfangsspule Spule 15 auf einem Bewegungskreis 45 um die Hochachse 20 des Arbeitsgerätes 1. Wurde das Arbeitsgerät 1 derart gestoppt, dass der Bewegungskreis 45 den Drahtabschnitt 32 des Randbegrenzungsdrahtes 31 tangiert, also der Abstand a des Bewegungskreises zum Drahtabschnitt null ist, ergibt sich der in Fig. 6a dargestellte Kurvenverlauf A des Empfangssignals 40. Wie aus dem Kurvenverlauf ersichtlich, weist die Kurve A Extremwerte E auf, die aus einem ersten Maximum Max1a, einem Minimum Min0a und einem zweiten Maximum Max2a bestehen.

Bevorzugt ist vorgesehen, dass nach dem Stoppen des Arbeitsgerätes 1 in Fahrtrichtung 7 die Drehung des Arbeitsgerätes 1 um seine Hochachse 20 über 360° erfolgt. Nach einer insbesondere vollständigen Drehung werden dann die während der Drehung erfassten Extremwerte E gemäß Fig. 6a, Kurve A von der Steuereinheit 10 ausgewertet.

Die Steuereinheit 10 ist ausgebildet, den und/oder die ermittelten Extremwerte E zu verarbeiten und daraus einen Wert für eine Steuergröße abzuleiten. Die Steuergröße wird genutzt, um nach der zur Erfassung der Extremwerte E eine weitere Drehbewegung des Arbeitsgerätes um die Hochachse auszuführen. Diese weitere Drehbewegung ist vorgesehen, um das Arbeitsgerät 1 in Fahrtrichtung 7 zum Randbegrenzungsdraht 31 auszurichten. Die Steuereinheit 10 wird das Arbeitsgerät 1 in Abhängigkeit der Steuergröße um die Hochachse 20 drehen und bei Erreichen des Wertes der Steuergröße die Drehbewegung stoppen. Nach dem Stoppen der Drehbewegung werden die Antriebsräder 2, 3 von der Steuereinheit 10 derart in Fahrtrichtung 7 angetrieben, dass der Randbegrenzungsdraht 31 überfahren wird und das Empfangssignal erneut eine Phasenumkehr erfährt, insbesondere sein Vorzeichen wechselt. Das Arbeitsgerät ist auf kurzem Fahrweg in die Arbeitsfläche 30 zurückgeführt.

Als Steuergröße für die auszuführende weitere Drehung zur Rückführung des Arbeitsgerätes 1 in die Arbeitsfläche 30 kann ein Prozentwert eines erfassten Extremwertes des Empfangssignals 40 genutzt werden, insbesondere ein Maximum Max1a, Max2a oder eine Minimum Min0a des Empfangssignals 40 oder ein zwischen erfassten Extremwert E des Empfangssignal 40 liegender Wert. Die Steuergröße ist somit in einer einfachen Ausführungsform des Verfahrens von einem erfassten Extremwert E abgeleitet, bzw. von einem Wert, der zwischen zwei Extremwerten E liegt.

Hat die Steuereinheit 10 den Extremwert des Empfangssignals 40 erfasst, kann die Steuereinheit 10 die Steuergröße als Prozentwert eines erfassten Extremwertes bestimmen oder zweckmäßig den erfassten Extremwert selbst als Steuergröße verwenden.

Alternativ oder ergänzend kann in einer Ausgestaltung des erfindungsgemäßen Verfahrens vorgesehen sein, dass die Steuereinheit 10 einem erfassten Extremwert E des Empfangssignals 40 einen Drehwinkel des Arbeitsgerätes 1 um die Hochachse 20 zuordnet. Mit dem Start der Drehbewegung um die Hochachse 20 zu Erfassung eines Extremwertes E des Empfangssignals 40 wird der Drehwinkel z.B. bei 0° beginnend gemessen und von der Steuereinheit 10 erfasst. Mit Erreichen eines Extremwertes E wird der bis dahin erreichte Drehwinkel dem Extremwert E zugeordnet. Der zum Extremwert erfasste Drehwinkel wird genutzt, um ausgehend von dem zugeordneten Drehwinkel des Extremwertes als Steuergröße einen vorgegebenen Drehwinkel zu bestimmen. Dieser vorgegebene Drehwinkel wird nach Abschluss der zur Erfassung der Extremwerte über eine Drehung von z.B. 360° für die weitere Drehung des Arbeitsgerätes genutzt, um dieses in die Arbeitsfläche 30 zurückzuführen. Dieser vorgegebene Drehwinkel kann zwischen 180° und 540° liegen. Insbesondere liegt der vorgegebenen Drehwinkel zwischen 270° und 450°, zweckmäßig zwischen 315° und 405°.

In Fig. 6a sind neben der Kurve A weitere Kurven B und C eingetragen. Die Kurve B entspricht der Darstellung der Lage B des Arbeitsgerätes 1 in Fig. 5, in der die Stoppstellung 1" des Arbeitsgerätes 1 derart erfolgt, dass der Bewegungskreis 45 einen Abstand a1 zum Randbegrenzungsdraht 31 bzw. zum überfahrenen Drahtabschnitt 32 hat. Wie am Verlauf der Kurve B ersichtlich, ändern sich zwar die Lage der Extremwerte E; dennoch sind zwei ausgeprägte Maxima und ein ausgeprägtes Minimum eindeutig erkennbar. Dabei fällt auf, dass das ausgeprägte Minimum der Kurve B in der Größe zwar geringer ausfällt als in der Kurve A, dass Minimum jedoch in der gleichen Winkelstellung des Arbeitsgerätes 1 um die Hochachse 20 auftritt.

Die Kurve C in Fig. 6a entspricht einem Abstand a2 des Bewegungskreises 45 der Empfangsspule 15, sowie er in der Darstellung der Stoppstellung 1‴ des Arbeitsgerätes1 der Lage C in Fig. 5 gezeigt ist. Auch in dieser Kurve C verschieben sich die Maxima, dass Minimum ist jedoch an gleicher Stelle ausgebildet wie in den Kurven A und B. Die Steuerung der Drehbewegung des Arbeitsgerätes 1 um die Hochachse 20 zur Rückführung des Arbeitsgerätes 1 in die Arbeitsfläche 30 liegt vorteilhaft auf der Mitte zwischen den beiden maximalen Extremwerten, also insbesondere zwischen den beiden Maxima. Die Steuergröße ist von den Abständen a, a1 und a2 der Kurven A, B und C abhängig und liegt insbesondere bei einem festen Drehwinkel von beispielhaft 270°.

In Weiterbildung der Erfindung kann vorgesehen sein, als Steuergröße eine vorbestimmte Zeitspanne der Drehung vorzusehen. Die Steuereinheit 10 ist ausgebildet, nach der Erfassung eines Extremwertes E des Empfangssignals 40 das Arbeitsgerät 1 für die vorbestimmte Zeitspanne weiter zu drehen. Eine derartige Zeitspanne kann zum Beispiel 10 Sekunden sein. Innerhalb dieser Zeitspanne hat das Arbeitsgerät 1 sich um seine Hochachse 20 derart weit gedreht, dass es sich bei einem Antrieb der Antriebsräder 2, 3 in Fahrtrichtung 7 nach vorne auf den überfahrenen Randbegrenzungsdraht 31 zu bewegt und wieder in die Arbeitsfläche 30 einfährt.

Figur 6b zeigt den Verlauf des Empfangssignals 40 nach dem Überfahren eines Außenecks 33 (Fig. 4) mit anschließendem Stopp des Arbeitsgerätes 1 und Drehung um die Hochachse 20. Auch hier ist deutlich erkennbar, dass sich abhängig vom Abstand a, a1 und a2 der Stoppstellung A, B oder C des Arbeitsgerätes 1 von dem Drahtabschnitt 32 bzw. dem Außeneck 33 des Randbegrenzungsdrahtes 31 die Amplitude des Empfangssignals ändert. Die Ableitung der Steuergröße erfolgt derart, dass eine Regelung auf eine Mitte zwischen den Maxima erfolgt. Beispielhaft ist dies in Fig. 6a und 6b durch eine strichlierte Linie wiedergegeben.

Durch die Auswertung des erfassten Empfangssignals 40 während einer vollständigen Drehung des Arbeitsgerätes 1 und die Hochachse 20 kann über den Drehwinkel zu ausgeprägten Extremwerten und/oder über ausgewählte Extremwerte selbst ein Steuergröße abgeleitet werden, um das aus der Arbeitsfläche 30 herausgefahrene Arbeitsgerät 1 auf kurzem Weg in die Arbeitsfläche zurückzuführen. Der Kerngedanke des Verfahrens besteht darin, nach dem Überfahren des Randbegrenzungsdrahtes 31 und einer festgestellten Phasenumkehr des Empfangssignals, insbesondere einem Vorzeichenwechsel des Empfangssignals, das Arbeitsgerät 1 zu stoppen, dann um eine Hochachse 20 zu drehen und die dabei erzeugten Empfangssignale 40 einer Empfangsspule 15 zu erfassen und auszuwerten. Durch die Auswertung der bei einer insbesondere 360° Drehung erfassten Empfangssignale 40 lässt sich ein Steuergröße ableiten, die ein direktes Zurückfahren des Arbeitsgerätes 1 in die Arbeitsfläche 30 ermöglicht. Das Verfahren ist bestimmt durch das Drehmanöver des Arbeitsgerätes 1, insbesondere eines Robotermähers, am Randbegrenzungsdraht 31 zur Rückführung des Arbeitsgerätes 1 in die Arbeitsfläche 30.

## Patentansprüche

1. Verfahren zur Steuerung eines selbstfahrenden Arbeitsgerätes (1), insbesondere eines Robotermähers, zur Bearbeitung einer durch einen Randbegrenzungsdraht (31) begrenzten Arbeitsfläche (30),
(a) wobei das Arbeitsgerät (1) zumindest zwei Antriebsräder (2, 3) aufweist, deren Drehachsen eine gemeinsame Radachse (4) bilden,
(b) und mit einem elektrischen Antrieb zum getrennten Antrieb der Antriebsräder (2, 3) der gemeinsamen Radachse (4),
(c) mit einer Steuereinheit (10) zur Ansteuerung des elektrischen Antriebs (5, 6) zur Ausführung einer Fahrbewegung des Arbeitsgerätes (1) in eine Fahrtrichtung (7),
(d) sowie mit einem auf dem Randbegrenzugsdraht (31) gesendeten Drahtsignal, dessen elektromagnetisches Feld in einer Empfangsspule (13, 14, 15) des Arbeitsgerätes (1) ein Empfangssignal (40) induziert,
(e) wobei die zumindest eine Empfangsspule (13, 14, 15) mit einem Längenabstand (a, b) von der Radachse (4) des Arbeitsgerätes (1) angeordnet ist,
(f) und das Arbeitsgerät (1) durch gegensinniges Antreiben der Antriebsräder (2, 3) um eine Hochachse (20) drehbar ist,
(g) wobei bei einem Überfahren des Randbegrenzungsdrahtes (31) durch das Arbeitsgerät (1) eine Phasenumkehr des Empfangssignals (40) auftritt, **dadurch gekennzeichnet,**
(h) **dass** die Steuereinheit (10) ausgebildet ist, bei einer Phasenumkehr des Empfangssignals (40) die Fahrbewegung des Arbeitsgerätes (1) anzuhalten und durch gegensinniges Antreiben der Antriebsräder (2, 3) das Arbeitsgerät (1) um seine Hochachse (20) zu drehen,
(i) **dass** die Steuereinheit (10) ausgebildet ist, während des Drehens des Arbeitsgeräts (1) das in der Empfangsspule (13, 14, 15) induzierte Empfangssignal (40) zu erfassen und auf einen Extremwert (E) auszuwerten,
(j) **dass** die Steuereinheit (10) ausgebildet ist, von dem ermittelten Extremwert (E) einen Wert einer Steuergröße für eine auszuführende Drehbewegung des Arbeitsgerätes (1) um die Hochachse (20) abzuleiten,
(k) **dass** die Steuereinheit (10) ausgebildet ist, das Arbeitsgerät (1) in Abhängigkeit der Steuergröße um die Hochachse (20) weiter zu drehen und bei Erreichen des Wertes der Steuergröße die Drehbewegung zu stoppen,
(l) und die Steuereinheit (10) ausgebildet ist, die Antriebsräder (2, 3) des in seiner Drehbewegung gestoppten Arbeitsgerätes (1) derart in eine Fahrtrichtung (7) anzutreiben, dass der Randbegrenzungsdraht (31) überfahren wird und das Empfangssignal (40) eine Phasenumkehr erfährt.

2. Verfahren nach Anspruch 1,
**dadurch gekennzeichnet, dass** die Steuereinheit (10) ausgebildet ist, zur Erfassung zumindest eines Extremwertes (E) das Arbeitsgerät (1) über zumindest 360° um seine Hochachse (20) zu drehen.

3. Verfahren nach Anspruch 1,
**dadurch gekennzeichnet, dass** die Steuergröße ein Prozentwert eines erfassten Extremwertes (E) des Empfangssignals (40) ist oder ein zwischen erfassten Extremwerten (E) des Empfangssignals (40) liegender Wert des Empfangssignals (40) ist.

4. Verfahren nach Anspruch 1 oder 2,
**dadurch gekennzeichnet, dass** Steuergröße ein erfasster Extremwert (E) des Empfangssignals (40) ist, insbesondere ein Maximum des Empfangssignals ist.

5. Verfahren nach Anspruch 1,
**dadurch gekennzeichnet, dass** die Steuereinheit (10) ausgebildet ist, einem erfassten Extremwert des Empfangssignals (40) einen Drehwinkel des Arbeitsgerätes (1) um die Hochachse (20) zuzuordnen, und die Steuereinheit (10) ausgebildet ist, ausgehend von dem zugeordneten Drehwinkel des Extremwertes (E) als Steuergröße einen vorgegebenen Drehwinkel zu bestimmen, der zwischen 180° und 540° liegt.

6. Verfahren nach Anspruch 5,
**dadurch gekennzeichnet, dass** der vorgegebene Drehwinkel zwischen 270° und 450° liegt, insbesondere zwischen 315° und 405° liegt.

7. Verfahren nach Anspruch 1,
**dadurch gekennzeichnet, dass** die Steuereinheit (10) ausgebildet ist, nach der Erfassung eines Extremwertes (E) das Arbeitsgerät (1) für eine vorbestimmte Zeitspanne um die Hochachse (20) weiter zu drehen.

8. Verfahren nach Anspruch 1,
**dadurch gekennzeichnet, dass** die Steuereinheit (10) ausgebildet ist, für die zumindest eine Empfangsspule (13, 14, 15) mehrere Extremwerte (E) des Empfangssignals (40) wie zwei Maxima und/oder zwei Minima zu erfassen, und die Steuereinheit (10) ausgebildet ist, jedem Maximum und/oder Minimum einen Drehwinkel des Arbeitsgerätes (1) um die Hochachse (20) zuzuordnen, und die Steuereinheit (10) ausgebildet ist, nach der Erfassung der Maxima und/oder Minima die zugeordneten Drehwinkel auszuwerten und das Arbeitsgerät (1) um die Hochachse (20) zu drehen, bis das Arbeitsgerät (1) eine Drehlage zwischen den beiden Maxima oder Minima einnimmt um die Drehbewegung zu stoppen, und die Antriebsräder (2, 3) des in seiner Drehbewegung gestoppten Arbeitsgerätes (1) derart in eine Fahrtrichtung (7) anzutreiben, dass der Randbegrenzungsdraht (31) überfahren wird und das Empfangssignal (40) eine Phasenumkehr erfährt.

9. Verfahren nach Anspruch 1 oder 8,
**dadurch gekennzeichnet,** das Arbeitsgerät (1) zwei Empfangsspulen (13, 14, 15) aufweist, die mit seitlichem Abstand (e) zueinander und mit einem Längenabstand (s, h) zu der Radachse (4) des Arbeitsgerätes (1) angeordnet sind.

10. Verfahren nach Anspruch 1, 8 oder 9,
**dadurch gekennzeichnet, dass** die Steuereinheit (10) ausgebildet ist, während dem Drehen des Arbeitsgeräts (1) die in den beiden Empfangsspulen (13, 14, 15) induzierten Empfangssignale (40) zu erfassen und auf deren Extremwerte (E) auszuwerten.

11. Verfahren nach Anspruch 1,
**dadurch gekennzeichnet, dass** die Steuereinheit (10) ausgebildet ist, während der Drehbewegung des Arbeitsgerätes (1) um die Hochachse (20) die verstreichende Drehzeit zwischen den Extremwerten (E) des Empfangssignals (40) zu erfassen, und die Steuereinheit (10) ausgebildet ist, als Steuergröße eine Zeitspanne der Drehzeit um die Hochachse (20) zu bestimmen, die kleiner als die erfasste Drehzeit ist.

12. Verfahren nach einem der Ansprüche 1 bis 11,
**dadurch gekennzeichnet, dass** an jedem Antriebsrad (2, 3) der Radachse (4) ein Elektromotor (5, 6) als elektrischer Antrieb vorgesehen ist.

13. Verfahren nach einem der Ansprüche 1 bis 12,
**dadurch gekennzeichnet, dass** die Hochachse (20) auf der Radachse (4) zwischen den beiden Antriebsrädern (2, 3) liegt.

14. Verfahren nach einem der Ansprüche 1 bis 13,
**dadurch gekennzeichnet, dass** die Hochachse (20) auf der Radachse (4) mittig zwischen den Antriebsrädern (2, 3) liegt.

## Claims

1. Method for controlling a self-propelled working device (1), in particular a robotic mower, for performing work on a working surface (30) bounded by an edge boundary wire (31),
(a) wherein the working device (1) has at least two drive wheels (2, 3), the rotary axes of which form a common wheel axle (4),
(b) and with an electric drive for separately driving the drive wheels (2, 3) of the common wheel axle (4),
(c) with a control unit (10) for controlling the electric drive (5, 6) to carry out a travel movement of the working device (1) in a direction of travel (7),
(d) and with a wire signal which is transmitted on the edge boundary wire (31) and the electromagnetic field of which induces a reception signal (40) in a receiving coil (13, 14, 15) of the working device (1),
(e) wherein the at least one receiving coil (13, 14, 15) is arranged with a length spacing (a, b) from the wheel axle (4) of the working device (1),
(f) and the working device (1) can be rotated around a vertical axis (20) by driving the drive wheels (2, 3) in opposite directions,
(g) wherein a phase reversal of the reception signal (40) occurs when the edge boundary wire (31) is crossed by the working device (1),
**characterized**
(h) **in that** the control unit (10) is designed to stop the travel movement of the working device (1) in the event of a phase reversal of the reception signal (40) and to rotate the working device (1) around its vertical axis (20) by driving the drive wheels (2, 3) in opposite directions,
(i) **in that** the control unit (10) is designed to capture the reception signal (40) induced in the receiving coil (13, 14, 15) during the rotation of the working device (1) and to evaluate it for an extreme value (E),
(j) **in that** the control unit (10) is designed to derive, from the determined extreme value (E), a value of a control variable for a rotary movement of the working device (1) to be carried out around the vertical axis (20),
(k) **in that** the control unit (10) is designed to further rotate the working device (1) around the vertical axis (20) on the basis of the control variable and to stop the rotary movement when the value of the control variable is reached,
(l) and the control unit (10) is designed to drive the drive wheels (2, 3) of the working device (1) stopped in its rotary movement in a direction of travel (7) in such a way that the edge boundary wire (31) is crossed and the reception signal (40) experiences a phase reversal.

2. Method according to claim 1,
**characterized in that** the control unit (10) is designed to rotate the working device (1) through at least 360° around its vertical axis (20) for the purpose of capturing at least one extreme value (E).

3. Method according to claim 1,
**characterized in that** the control variable is a percentage value of a captured extreme value (E) of the reception signal (40) or is a value of the reception signal (40) between captured extreme values (E) of the reception signal (40).

4. Method according to claim 1 or 2,
**characterized in that** the control variable is a captured extreme value (E) of the reception signal (40), in particular is a maximum of the reception signal.

5. Method according to claim 1,
**characterized in that** the control unit (10) is designed to assign a rotary angle of the working device (1) around the vertical axis (20) to a captured extreme value of the reception signal (40), and the control unit (10) is designed to determine a predefined rotary angle, which is between 180° and 540°, based on the assigned rotary angle of the extreme value (E) as the control variable.

6. Method according to claim 5,
**characterized in that** the predefined rotary angle is between 270° and 450°, in particular between 315° and 405°.

7. Method according to claim 1,
**characterized in that** the control unit (10) is designed to further rotate the working device (1) around the vertical axis (20) for a predetermined period of time after capturing an extreme value (E).

8. Method according to claim 1,
**characterized in that** the control unit (10) is designed to capture, for the at least one receiving coil (13, 14, 15), a plurality of extreme values (E) of the reception signal (40) such as two maxima and/or two minima, and the control unit (10) is designed to assign a rotary angle of the working device (1) around the vertical axis (20) to each maximum and/or minimum, and the control unit (10) is designed to evaluate the assigned rotary angles after capturing the maxima and/or minima and to rotate the working device (1) around the vertical axis (20) until the working device (1) assumes a rotary position between the two maxima or minima in order to stop the rotary movement, and to drive the drive wheels (2, 3) of the working device (1) stopped in its rotary movement in a direction of travel (7) in such a way that the edge boundary wire (31) is crossed and the reception signal (40) experiences a phase reversal.

9. Method according to claim 1 or 8,
**characterized in that** the working device (1) has two receiving coils (13, 14, 15) which are arranged with a lateral spacing (e) from each other and with a length spacing (s, h) from the wheel axle (4) of the working device (1).

10. Method according to claim 1, 8 or 9,
**characterized in that** the control unit (10) is designed to capture the reception signals (40) induced in the two receiving coils (13, 14, 15) during the rotation of the working device (1) and to evaluate them for their extreme values (E).

11. Method according to claim 1,
**characterized in that** the control unit (10) is designed, during the rotary movement of the working device (1) around the vertical axis (20), to capture the elapsing rotary time between the extreme values (E) of the reception signal (40), and the control unit (10) is designed to determine, as the control variable, a period of time of the rotary time around the vertical axis (20) that is shorter than the captured rotary time.

12. Method according to one of claims 1 to 11,
**characterized in that** an electric motor (5, 6) is provided as an electric drive on each drive wheel (2, 3) of the wheel axle (4).

13. Method according to one of claims 1 to 12,
**characterized in that** the vertical axis (20) lies on the wheel axle (4) between the two drive wheels (2, 3).

14. Method according to one of claims 1 to 13,
**characterized in that** the vertical axis (20) is located on the wheel axle (4) centrally between the drive wheels (2, 3).

## Revendications

1. Procédé de commande d'un outil de travail automoteur (1), en particulier d'une tondeuse robotisée, pour le traitement d'une surface de travail (30) délimitée par un fil de délimitation de bordure (31),
(a) l'outil de travail (1) possédant au moins deux roues motrices (2, 3) dont les axes de rotation forment un essieu commun (4),
(b) et comprenant un entraînement électrique destiné à l'entraînement séparé des roues motrices (2, 3) de l'essieu commun (4),
(c) comprenant une unité de commande (10) destinée à commander l'entraînement électrique (5, 6) afin d'exécuter un mouvement de déplacement de l'outil de travail (1) dans une direction de déplacement (7),
(d) et comprenant également un signal filaire envoyé sur le fil de délimitation de bordure (31), dont le champ électromagnétique induit un signal de réception (40) dans une bobine de réception (13, 14, 15) de l'outil de travail (1),
(e) l'au moins une bobine de réception (13, 14, 15) étant disposée à un écart longitudinal (a, b) de l'essieu (4) de l'outil de travail (1),
(f) et l'outil de travail (1) pouvant tourner autour d'un axe vertical (20) par l'entraînement en sens inverse des roues motrices (2, 3),
(g) une inversion de phase du signal de réception (40) se produisant lorsque l'outil de travail (1) franchit le fil de délimitation de bordure (31),
**caractérisé en ce que**
(h) l'unité de commande (10) est configurée pour stopper le mouvement de déplacement de l'outil de travail (1) dans le cas d'une inversion de phase du signal de réception (40) et pour faire tourner l'outil de travail (1) autour de son axe vertical (20) par un entraînement en sens inverse des roues motrices (2, 3),
(i) l'unité de commande (10) est configurée pour détecter, pendant la rotation de l'outil de travail (1), le signal de réception (40) induit dans la bobine de réception (13, 14, 15) et pour l'évaluer en vue de la présence d'une valeur extrême (E),
(j) l'unité de commande (10) est configurée pour dériver, à partir de la valeur extrême (E) déterminée, une valeur d'une grandeur de commande pour un mouvement de rotation à exécuter de l'outil de travail (1) autour de l'axe vertical (20),
(k) l'unité de commande (10) est configurée pour continuer à faire tourner l'outil de travail (1) autour de l'axe vertical (20) en fonction de la grandeur de commande et pour arrêter le mouvement de rotation lorsque la valeur de la grandeur de commande est atteinte,
(l) et l'unité de commande (10) est configurée pour entraîner les roues motrices (2, 3) de l'outil de travail (1) arrêté dans son mouvement de rotation dans une direction de déplacement (7) de telle sorte que le fil de délimitation de bordure (31) soit franchi et que le signal de réception (40) subisse une inversion de phase.

2. Procédé selon la revendication 1,
**caractérisé en ce que** l'unité de commande (10) est configurée pour, en vue de la détection d'au moins une valeur extrême (E), faire tourner l'outil de travail (1) sur au moins 360° autour de son axe vertical (20).

3. Procédé selon la revendication 1,
**caractérisé en ce que** la grandeur de commande est une valeur en pourcentage d'une valeur extrême (E) détectée du signal de réception (40) ou une valeur du signal de réception (40) située entre des valeurs extrêmes (E) détectées du signal de réception (40).

4. Procédé selon la revendication 1 ou 2,
**caractérisé en ce que** la grandeur de commande est une valeur extrême (E) détectée du signal de réception (40), notamment un maximum du signal de réception.

5. Procédé selon la revendication 1,
**caractérisé en ce que** l'unité de commande (10) est configurée pour attribuer à une valeur extrême détectée du signal de réception (40) un angle de rotation de l'outil de travail (1) autour de l'axe vertical (20), et l'unité de commande (10) est configurée pour, à partir de l'angle de rotation attribué à la valeur extrême (E), déterminer en tant que grandeur de commande un angle de rotation prédéfini qui est compris entre 180° et 540°.

6. Procédé selon la revendication 5,
**caractérisé en ce que** l'angle de rotation prédéfini est compris entre 270° et 450°, notamment entre 315° et 405°.

7. Procédé selon la revendication 1,
**caractérisé en ce que** l'unité de commande (10) est configurée pour continuer à faire tourner l'outil de travail (1) autour de l'axe vertical (20) pendant une durée prédéterminée après la détection d'une valeur extrême (E).

8. Procédé selon la revendication 1,
**caractérisé en ce que** l'unité de commande (10) est configurée pour, pour l'au moins une bobine de réception (13, 14, 15), détecter plusieurs valeurs extrêmes (E) du signal de réception (40), telles que deux maxima et/ou deux minima, et l'unité de commande (10) est configurée pour attribuer à chaque maximum et/ou minimum un angle de rotation de l'outil de travail (1) autour de l'axe vertical (20), et l'unité de commande (10) est configurée pour, après la détection des maxima et/ou minima, évaluer les angles de rotation attribués et faire tourner l'outil de travail (1) autour de l'axe vertical (20) jusqu'à ce que l'outil de travail (1) adopte une position de rotation entre les deux maxima ou minima afin d'arrêter le mouvement de rotation, et entraîner les roues motrices (2, 3) de l'outil de travail (1) arrêté dans son mouvement de rotation dans une direction de déplacement (7) de telle sorte que le fil de délimitation de bordure (31) soit franchi et que le signal de réception (40) subisse une inversion de phase.

9. Procédé selon la revendication 1 ou 8,
**caractérisé en ce que** l'outil de travail (1) possède deux bobines de réception (13, 14, 15) qui sont disposées avec un écart latéral (e) l'une par rapport à l'autre et avec un écart longitudinal (s, h) par rapport à l'essieu (4) de l'outil de travail (1).

10. Procédé selon la revendication 1, 8 ou 9,
**caractérisé en ce que** l'unité de commande (10) est configurée pour détecter, pendant la rotation de l'outil de travail (1), les signaux de réception (40) induits dans les deux bobines de réception (13, 14, 15) et pour les évaluer en vue de la présence de leurs valeurs extrêmes (E).

11. Procédé selon la revendication 1,
**caractérisé en ce que** l'unité de commande (10) est configurée pour, pendant le mouvement de rotation de l'outil de travail (1) autour de l'axe vertical (20), détecter le temps de rotation écoulé entre les valeurs extrêmes (E) du signal de réception (40), et l'unité de commande (10) est configurée pour déterminer, en tant que grandeur de commande, une durée du temps de rotation autour de l'axe vertical (20) qui est inférieure au temps de rotation détecté.

12. Procédé selon l'une des revendications 1 à 11,
**caractérisé en ce qu'**un moteur électrique (5, 6) est prévu comme entraînement électrique au niveau de chaque roue motrice (2, 3) de l'essieu (4).

13. Procédé selon l'une des revendications 1 à 12,
**caractérisé en ce que** l'axe vertical (20) est situé sur l'essieu (4) entre les deux roues motrices (2, 3).

14. Procédé selon l'une des revendications 1 à 13,
**caractérisé en ce que** l'axe vertical (20) est situé sur l'essieu (4) au centre entre les roues motrices (2, 3).
